# FASCICULE DE BREVET EUROPEEN

(11) **EP 2 179 163 B1**
(45) Date de publication et mention de la délivrance du brevet: **28.09.2016**
(21) Numéro de dépôt: 08841996.5
(22) Date de dépôt: 04.08.2008
(51) Int. Cl.: F02K 1/38, F02K 1/48

(54) **Chevron pour tuyère, tuyère et turbomoteur associés**
Zacke für eine Düse, zugehörige Düse und Turbotriebwerk
Chevron for a nozzle, corresponding nozzle and turboreactor

(30) Priorité: 14.08.2007 FR 0705847
(43) Date de publication de la demande: 28.04.2010
(73) Titulaire: AIRBUS OPERATIONS (SAS), 31060 Toulouse (FR)
(72) Inventeur: SYLLA, Amadou, André, 31300 Toulouse (FR); HUBERT, Jérome, 31000 Toulouse (FR); PELAGATTI, Olivier, 31200 Toulouse (FR); PRAT, Damien, 31770 Colomiers (FR); DEBATIN, Klaus, 31470 Bonrepos Sur Aussonelle (FR)
(74) Mandataire: Gevers & Orès
(86) Numéro de dépôt international: PCT/FR2008/001165
(87) Numéro de publication internationale: WO 2009/053554

(56) Documents cités:
- EP-A- 1 496 238
- EP-A- 1 580 419
- EP-A- 1 617 068
- EP-A- 1 873 388
- EP-A- 1 873 389
- FR-A- 2 565 631
- FR-A- 2 902 758
- GB-A- 766 985
- GB-A- 2 289 921
- US-A1- 2002 178 711

## Description

La présente invention concerne des chevrons anti-bruit pour les tuyères de turbomoteurs pour aéronefs, ainsi que les tuyères pourvues desdits chevrons et les turbomoteurs pourvus d'au moins une telle tuyère.

On sait que, à l'arrière d'une tuyère de turbomoteur, le jet émis par cette dernière entre en contact avec au moins un autre flux gazeux : dans le cas d'un turbomoteur à simple flux, ce dernier entre en contact avec l'air ambiant, alors que, dans le cas d'un turbomoteur à double flux, le flux froid et le flux chaud entrent en contact, non seulement l'un avec l'autre, mais encore avec l'air ambiant.

Du fait que la vitesse du jet émis par ladite tuyère est différente de la vitesse du ou desdits autres flux gazeux rencontrés par ledit jet, il en résulte des cisaillements fluides de pénétration entre lesdits flux, lesdits cisaillements fluides engendrant du bruit, généralement appelé "bruit de jet" dans la technique aéronautique.

Pour atténuer un tel bruit de jet, on a déjà pensé à engendrer des turbulences aux frontières entre lesdits flux ayant des vitesses différentes.

Par exemple, le document GB-A-766 985 décrit une tuyère dont l'orifice de sortie est pourvu, à sa périphérie, d'une pluralité de saillies qui s'étendent vers l'arrière et dont la direction générale est au moins approximativement celle du jet émis par ladite tuyère. De telles saillies sont constituées par des "dents" pouvant présenter de nombreuses formes différentes.

En variante, le document GB-A-2 289 921 propose de pratiquer des échancrures dans le bord de l'orifice de sortie de la tuyère. De telles échancrures sont réparties à la périphérie dudit orifice de sortie et chacune d'elles présente généralement la forme au moins approximative d'un triangle dont la base est confondue avec ledit bord de l'orifice de sortie et dont le sommet se trouve en avant de ce bord de sortie. Il en résulte la formation, entre deux échancrures consécutives, d'une dent en forme au moins approximative de triangle ou de trapèze.

De telles dents sont généralement appelées "chevrons" dans la technique aéronautique, quelle que soit leur forme précise.

Les chevrons connus sont généralement efficaces pour atténuer le bruit de jet ; cependant, ils présentent l'inconvénient d'engendrer une traînée importante, notamment en vol de croisière.

Pour remédier à cet inconvénient, il est déjà connu, par EP-1 580 419, de raccourcir la longueur des chevrons. Pour ce faire, la forme de chaque chevron est délimitée :
- par deux arêtes latérales dont les extrémités avant sont solidaires de ladite tuyère et qui, en s'éloignant de cette dernière, convergent l'une vers l'autre sans se rejoindre, de sorte que les extrémités arrière desdites arêtes latérales sont écartées l'une de l'autre, les arêtes latérales dudit chevron étant symétriques l'une de l'autre par rapport à un axe longitudinal médian du chevron dont la direction générale est celle dudit jet ; et
- par une arête transversale concave qui relie les extrémités arrière desdits arêtes latérales en formant deux protubérances latérales symétriques séparées par un évidement intermédiaire.

Ainsi, chacune des protubérances latérales d'un tel chevron engendre un tourbillon, les deux tourbillons d'un chevron étant imbriqués et contrarotatifs. L'ensemble desdits chevrons engendre donc un système tourbillonnaire homogénéisant rapidement les flux gazeux à l'arrière de la tuyère. Il en résulte donc une atténuation rapide du bruit du jet.

Par ailleurs, par rapport à un chevron triangulaire connu, qui serait formé par lesdites arêtes latérales convergeant jusqu'à se rejoindre, on remarquera qu'un tel chevron connu à protubérances latérales est plus court (il présente donc une masse et une traînée plus faibles que ledit chevron triangulaire). En effet, ledit chevron de EP-1 580 419 se présente alors comme ledit chevron triangulaire connu tronqué par ladite ligne transversale, tout en ayant une efficacité d'atténuation sonore accrue.

Toutefois, dans un tel chevron connu, lesdites protubérances latérales et ledit évidemment intermédiaire forment des pointes qui se comportent comme des sources acoustiques parasites supplémentaires. Ainsi, ce que l'on gagne en traînée, peut être perdu en bruit.

Pour remédier à cet inconvénient, le document EP-1 873 388 prévoit d'arrondir ladite arête transversale concave et lesdites protubérances latérales symétriques. Ainsi, on élimine lesdites sources acoustiques parasites dues aux pointes du chevron décrit dans EP 1 580 419.

La présente invention a pour objet de perfectionner encore plus le chevron décrit dans EP - 1 580 419, afin de réduire encore plus l'émission de bruit, tout en bénéficiant d'une réduction de trainée.

A cette fin, selon l'invention, qui est définie par les revendications adjointes, le chevron qui est disposé à la périphérie d'un orifice de sortie du jet d'une tuyère de turbomoteur en vue d'atténuer le bruit dudit jet et dont la forme est délimitée :
- par deux arêtes latérales dont les extrémités avant sont solidaires de ladite tuyère et qui, en s'éloignant de cette dernière, convergent l'une vers l'autre sans se rejoindre, de sorte que les extrémités arrière desdites arêtes latérales sont écartées l'une de l'autre, les arêtes latérales dudit chevron étant symétriques l'une de l'autre par rapport à un axe longitudinal médian du chevron dont la direction générale est celle dudit jet ; et
- par une arête transversale concave qui relie les extrémités arrière desdites arêtes latérales en formant deux protubérances latérales séparées par un évidement intermédiaire, est tel que lesdites protubérances latérales sont décalées l'une de l'autre le long dudit axe longitudinal médian dudit chevron.

En effet, la Demanderesse a constaté que la dissymétrie desdites protubérances était favorable au système tourbillonnaire engendré par le chevron et favorisait l'homogénéisation rapide des flux gazeux à l'arrière des tuyères.

Ainsi, grâce à la présente invention, on peut obtenir qu'un aéronef dont les tuyères sont munies desdits chevrons soit silencieux dans les phases d'atterrissage et de décollage et présente une traînée réduite en croisière. La présente invention permet également d'améliorer le bruit dans les phases de vol en croisière et en montée, avec au final une cabine d'aéronef plus silencieuse.

De préférence, comme dans le chevron de EP - 1 873 388, ladite arête transversale est curviligne de façon que lesdites protubérances latérales et ledit évidemment intermédiaire soient arrondis.

Une tuyère de turbomoteur conforme à la présente invention comporte donc une pluralité de chevrons, tels que décrits ci-dessus, répartis à la périphérie de l'orifice de sortie dudit jet. Tous les chevrons portés par ledit orifice peuvent être identiques. En variante, deux chevrons consécutifs peuvent être différents et symétriques l'un de l'autre par rapport à la direction générale dudit jet.

Dans le cas où le turbomoteur est du type à double flux, avec une tuyère pour le flux froid et une tuyère pour le flux chaud, au moins l'une desdites tuyères est du type mentionné ci-dessus. Avantageusement, la tuyère pour le flux froid et la tuyère pour le flux chaud sont pourvues de chevrons conformes à la présente invention.
Les figures du dessin annexé feront bien comprendre comment l'invention peut être réalisée. Sur ces figures, des références identiques désignent des éléments semblables.
La figure 1 est une vue en coupe partielle schématique d'un turbomoteur à double flux, dont les tuyères sont équipées de chevrons conformes à la présente invention.
La figure 2 est une vue latérale schématique partielle agrandie de la partie arrière des tuyères du turbomoteur de la figure 1.
La figure 3 est une vue agrandie en plan d'un chevron conforme à la présente invention.
La figure 4 est une vue en plan d'une variante de réalisation du chevron selon l'invention.
Les figures 5 à 7 montrent, en vues en plan (partielles), des exemples d'agencements de chevrons selon l'invention disposés à l'arrière d'une tuyère.

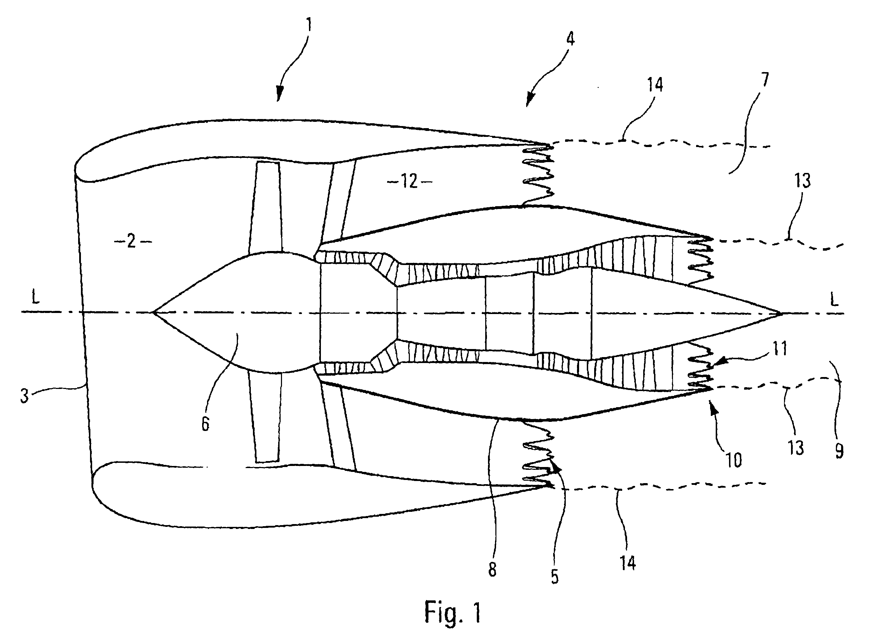

Le turbomoteur à double flux de type connu, montré par la figure 1, comporte une nacelle creuse 1, d'axe longitudinal L-L, comportant, à l'avant, une entrée d'air 2 pourvue d'un bord d'attaque 3 et, dans sa partie arrière, une tuyère de sortie d'air annulaire 4 pourvue d'un bord de fuite 5.

A l'intérieur de ladite nacelle creuse 1, sont disposés :
- une soufflante 6 dirigée vers l'entrée d'air 2 et apte à engendrer le flux froid 7 dudit turbomoteur, sortant par la tuyère 4 ; et
- un générateur central 8, comprenant de façon connue des compresseurs à basse et haute pression, une chambre de combustion et des turbines à basse et haute pression, et engendrant le flux chaud 9 dudit turbomoteur, ledit générateur de flux chaud 9 comportant, dans sa partie arrière, une tuyère 10 pourvue d'un bord de fuite 11 pour le flux chaud 9.

Le générateur central 8 délimite avec la nacelle 1 un canal interne 12 à section annulaire, aboutissant à la tuyère 4. Le flux froid traverse le canal interne 12 et la tuyère 4 et sort à travers le bord de fuite 5.

Ainsi, à la sortie de ce turbomoteur connu, le flux chaud central 9 est entouré par le flux froid annulaire 7, qui pénètre dans l'air ambiant. Sur la figure 1, on a représenté schématiquement la frontière 13 entre le flux chaud 9 et le flux froid 7 et la frontière 14 entre le flux froid 7 et l'air ambiant. Bien entendu, aux frontières 13 et 14, les fluides en contact ont des vitesses différentes, ce qui engendre le bruit de jet décrit ci-dessus.

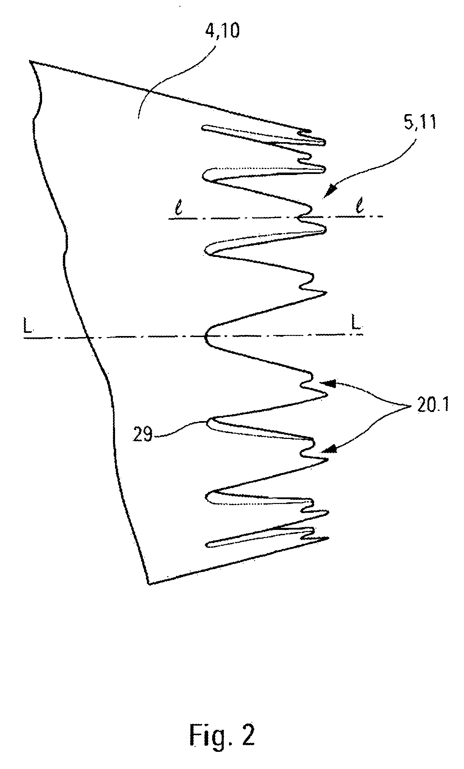

Pour atténuer ce bruit de jet, le bord de sortie 11 du flux chaud 9 et/ou le bord de fuite 5 du flux froid 7 sont pourvus de chevrons répartis à leur périphérie, comme cela est illustré sur la figure 2.

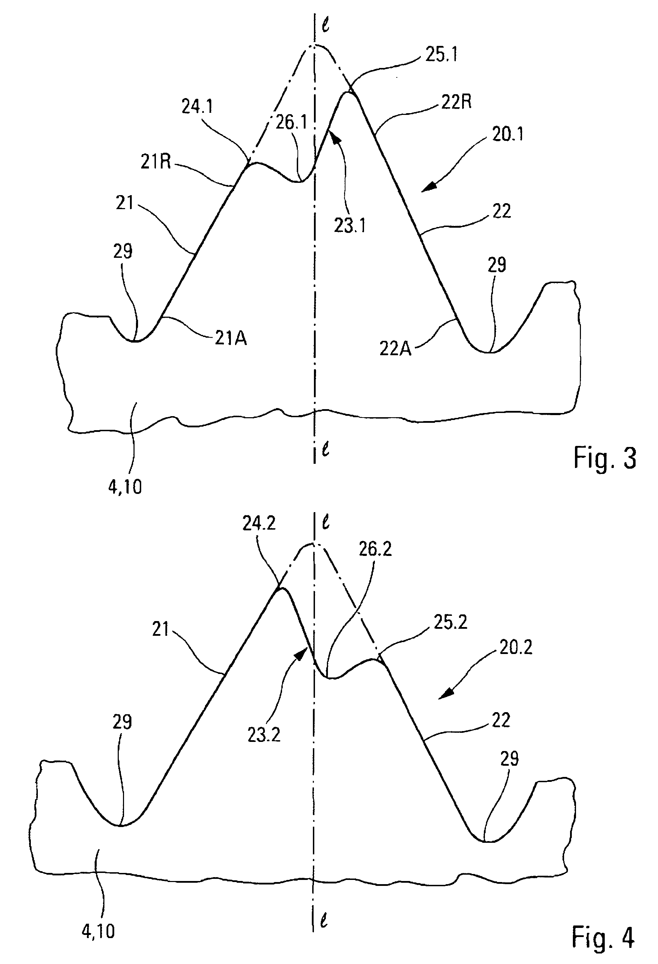

L'exemple de chevron 20.1, conforme à la présente invention et représenté sur les figures 2 et 3, comporte deux arêtes latérales 21 et 22 dont les extrémités avant 21 A et 22A sont solidaires de ladite tuyère 4 ou 10. Les côtés latéraux 21 et 22 convergent l'un vers l'autre en s'éloignant vers l'arrière, sans toutefois se rencontrer : il en résulte que les extrémités arrière 21R et 22R desdites arêtes latérales convergentes 21 et 22 sont écartées l'une de l'autre. Elles sont reliées l'une à l'autre par une arête transversale curviligne 23.1, qui forme deux protubérances latérales, 24.1 et 25.1 respectivement, séparées par un évidement intermédiaire 26.1.

Dans le chevron 20.1, l'arête transversale 23.1 est curviligne et les protubérances 24.1, 25.1, ainsi que l'évidement intermédiaire 26.1, sont arrondis, et l'ensemble du chevron 20.1 est dissymétrique par rapport à un axe longitudinal médian ℓ-ℓ, dont la direction générale est celle du jet 7, 9. La protubérance arrondie 24.1 est moins en arrière que la protubérance arrondie 25.1, lesdites protubérances étant dissymétriques. Une telle dissymétrie entre les deux protubérances arrondies 24.1 et 25.1 du chevron 20.1 constitue un paramètre supplémentaire pour agir sur le système tourbillonnaire engendrée par le chevron 20.1.

En effet, en fonctionnement de la tuyère 4, 10, les deux protubérances latérales arrondies 24.1, 25.1 engendrent, à l'arrière de celle-ci, un système tourbillonnaire comportant des couples de tourbillons contrarotatifs. On comprendra aisément que l'amplitude de ce système tourbillonnaire dépend non seulement de la longueur du chevron 20.1, mais encore des longueurs des protubérances 24.1, 25.1 et de la profondeur de l'évidement 26.1. Des calculs et des expériences permettent d'adapter la forme exacte dudit chevron 20.1 (ainsi que la répartition des chevrons 20.1 autour de l'orifice 2, 11) [voir la figure 2] à chaque tuyère 4, 10 particulière.

Sur les figures 2 et 3, on a supposé que deux chevrons 20.1 successifs étaient jointifs et reliés par un arrondi 29.

La figure 4 illustre une variante de réalisation 20.2 du chevron conforme à la présente invention, dans laquelle la protubérance arrondie 24.2 est plus en arrière que la protubérance arrondie 25.2 du fait de la dissymétrie de l'arrête curviligne 23.2 et de l'évidement 26.2 par rapport à l'axe ℓ-ℓ. Les protubérances arrondies sont alors dissymétriques, ce qui, tout comme précédemment, constitue un paramètre important pour agir sur le système tourbillonnaire engendré par les chevrons 20.2.

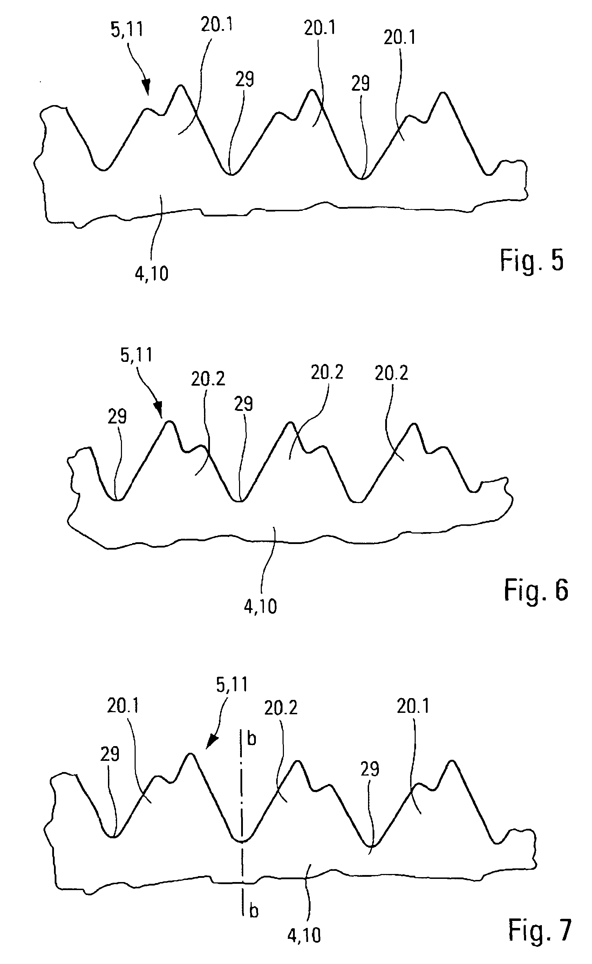

Sur les figures 5, 6 et 7, on a représenté, en développée, un bord de tuyère 5, 11 formé par une suite de chevrons 20.1, par une suite de chevrons 20.2 et par une suite mixte de chevrons 20.1 et 20.2, respectivement.

Dans le cas de la suite mixte de la figure 7, deux chevrons 20.1 et 20.2 consécutifs peuvent être symétriques l'un de l'autre par rapport à un axe longitudinal b-b, dont la direction générale est celle dudit jet 7, 9.

## Revendications

1. Chevron (20.1, 20.2) qui est disposé à la périphérie d'un orifice de sortie (5, 11) du jet (7, 9) d'une tuyère (4, 10) de turbomoteur en vue d'atténuer le bruit dudit jet et dont la forme est délimitée :
- par deux arêtes latérales (21, 22) dont les extrémités avant (21 A, 22A) sont solidaires de ladite tuyère (4, 10) et qui, en s'éloignant de cette dernière, convergent l'une vers l'autre sans se rejoindre, de sorte que les extrémités arrière (21 R, 22R) desdites arêtes latérales (21, 22) sont écartées l'une de l'autre, les arêtes latérales (21, 22) dudit chevron étant symétriques l'une de l'autre par rapport à un axe longitudinal médian du chevron dont la direction générale est celle dudit jet (7, 9) ; et
- par une arête transversale (23.1, 23.2) qui relie les extrémités arrière (21R, 22R) desdites arêtes latérales (21, 22) **caractérisé en ce que** ladite arête transversale est concave et relie lesdites extrémités arrière desdites arêtes latérales en formant deux protubérances latérales (24.1, 25.1 - 24.2, 25.2) séparées par un évidement intermédiaire (26.1, 26.2), et décalées l'une de l'autre le long dudit axe longitudinal médian dudit chevron (20.1, 20.2).

2. Chevron selon la revendication 1,
**caractérisé en ce que** ladite arête transversale (23.1, 23.2) est curviligne de façon que lesdites protubérances latérales (24.1, 25.1 - 24.2, 25.2) et
ledit évidemment intermédiaire (26.1, 26.2) soient arrondis.

3. Tuyère de turbomoteur dont l'orifice de sortie du jet (5, 11) est pourvu de chevrons répartis à sa périphérie pour atténuer le bruit dudit jet, **caractérisée en ce que** chacun desdits chevrons est du type spécifié sous l'une des revendications 1 ou 2.

4. Tuyère selon la revendication 3,
**caractérisée en ce que** lesdits chevrons sont tous identiques.

5. Tuyère selon la revendication 4,
**caractérisée en ce que** deux chevrons consécutifs sont différents et symétriques l'un de l'autre par rapport à la direction générale dudit jet (7, 9).

6. Turbomoteur à double flux, comportant une tuyère pour le flux froid et une tuyère pour le flux chaud,
**caractérisé en ce qu'**au moins l'une desdites tuyères est telle que spécifiée sous l'une des revendications 3 à 5.

7. Turbomoteur selon la revendication 6,
**caractérisé en ce que** ladite tuyère pour le flux froid et ladite tuyère pour le flux chaud sont telles que spécifiées sous l'une des revendications 3 à 5.

## Patentansprüche

1. Sparren (20.1, 20.2), der an dem Rand einer Ausgangsöffnung (5, 11) des Strahls (7, 9) einer Düse (4, 10) von einem Turbomotor angebracht ist, um den Lärm des Strahls abzuschwächen, und dessen Form begrenzt ist:
- durch zwei seitliche Stege (21, 22), deren vordere Enden (21A, 22A) mit der Düse (4, 10) einstückig sind und die, während sie sich von der letzteren entfernen, zueinander konvergieren, ohne zusammenzugelangen, so dass die hinteren Enden (21 R, 22R) der seitlichen Stege (21, 22) voneinander beabstandet sind, wobei die seitlichen Stege (21, 22) des Sparrens symmetrisch zueinander mit Bezug auf eine longitudinale, mittlere Achse des Sparrens sind, deren allgemeine Richtung diejenige des Strahls (7, 9) ist; und
- durch einen transversalen Steg (23.1 23.2), der die hinteren Enden (21 R, 22R) der seitlichen Stege (21, 22) verbindet,
**dadurch gekennzeichnet, dass** der transversale Steg konkav ist und die hinteren Enden der seitlichen Stege miteinander verbindet, indem er zwei seitliche Wulste (24.1, 25.1 - 24.2, 25.2) bildet, die durch eine dazwischen liegende Aussparung (26.1, 26.2) voneinander getrennt sind und entlang der longitudinalen, mittleren Achse des Sparrens (20.1, 20.2) voneinander versetzt sind.

2. Sparren nach Anspruch 1,
**dadurch gekennzeichnet, dass** der transversale Steg (23.1, 23.2) krummlinig ist, so dass die seitlichen Wulste (24.1, 25.1 - 24.2, 25.2) und die dazwischen liegende Aussparung (26.1, 26.2) abgerundet sind.

3. Düse von einem Turbomotor, deren Ausgangsöffnung des Strahls (5, 11) mit Sparren versehen ist, die an ihrem Rand verteilt sind, um den Lärm des Strahls abzuschwächen,
**dadurch gekennzeichnet, dass** jeder Sparren gemäß dem Typ ist, der in einem der Ansprüche 1 oder 2 angegeben ist.

4. Düse nach Anspruch 3,
**dadurch gekennzeichnet, dass** die Sparren alle identisch sind.

5. Düse nach Anspruch 4,
**dadurch gekennzeichnet, dass** zwei aufeinander folgende Sparren unterschiedlich und zueinander symmetrisch mit Bezug auf die allgemeine Richtung des Strahls (7, 9) sind.

6. Zweiflutiger Turbomotor mit einer Düse für den kalten Strom und einer Düse für den heißen Strom,
**dadurch gekennzeichnet, dass** zumindest eine der Düsen derart ist, wie in einem der Ansprüche 3 bis 5 angegeben.

7. Turbomotor nach Anspruch 6,
**dadurch gekennzeichnet, dass** die Düse für den kalten Strom und die Düse für dem heißen Strom derart sind, wie in einem der Ansprüche 3 bis 5 angegeben.

## Claims

1. A chevron (20.1, 20.2, 20.3) which is positioned at the periphery of an outlet orifice (5, 11) for the jet (7, 9) from a turbojet engine nozzle (4, 10) for the purposes of attenuating the noise of said jet and the shape of which is delimited:
- by two lateral sides (21, 22) of which the front ends (21A, 22A) are secured to said nozzle (4, 10) and which, with increasing distance therefrom, converge toward one another without meeting so that the rear ends (21R, 22R) of said lateral sides (21, 22) are separated from one another, the lateral side (21, 22) of said chevron being symmetric to one another with respect to a median longitudinal axis of the chevron, the overall direction of which is that of said jet (7, 9); and
- by a transverse line (23.1, 23.2, 23.3) which connects the rear ends (21R, 22R) of said lateral sides (21, 22),
**characterized in that** said transversal side is concave and connects said rear ends of said lateral sides thereby forming two lateral protrusions (24.1, 25.1 - 24.2, 25.2 - 24.3, 25.3) separated by an intermediate recess (26.1, 26.2, 26.3), and offset from one another along said median longitudinal axis of said chevron (20.1, 20.2).

2. A chevron according to claim 1,
**characterized in that** said transverse line (23.1, 23.2, 23.3) is curvilinear in such a way that said lateral protrusions (24.1, 25.1 - 24.2, 25.2 - 24.3, 25.3) and said intermediate recess (26.1, 26.2, 26.3) are rounded.

3. A turbojet engine nozzle of which the jet outlet orifice (5, 11) is provided with chevrons distributed at its periphery in order to attenuate the noise of said jet, **characterized in that** said chevrons are those specified in one of claims 1 or 2.

4. The nozzle as claimed in claim 3,
**characterized in that** said chevrons are all identical.

5. The nozzle as claimed in claim 4, provided with chevrons as claimed in claim 3,
**characterized in that** two consecutive chevrons differ from and are symmetric to one another with respect to the overall direction of said jet (7, 9).

6. A bypass turbojet engine comprising a nozzle for the cold flow and a nozzle for the hot flow,
**characterized in that** at least one of said nozzles is as specified in one of claims 3 to 5.

7. The turbojet engine as claimed in claim 6,
**characterized in that** said nozzle for the cold flow and said nozzle for the hot flow are as specified in one of claims 3 to 5.
